# EUROPÄISCHE PATENTSCHRIFT

(11) **EP 3 120 950 B1**
(45) Veröffentlichungstag und Bekanntmachung des Hinweises auf die Patenterteilung: **13.11.2019**
(21) Anmeldenummer: 16172818.3
(22) Anmeldetag: 03.06.2016
(51) Int. Cl.: B21J 15/02, B21J 15/12, B21J 15/28, B29C 65/08, B29C 65/60, B29C 65/00

(54) **ÜBERTRAGUNGSELEMENT FÜR EINE STANZNIETVORRICHTUNG, STANZNIETVORRICHTUNG, FERTIGUNGSEINRICHTUNG UND VERFAHREN ZUM ERMITTELN EINES SCHWINGUNGSVERHALTENS**
TRANSFER ELEMENT FOR A SELF-PIERCING RIVET DEVICE, SELF-PIERCING RIVET DEVICE, PRODUCTION DEVICE AND METHOD FOR DETERMINING A VIBRATION CHARACTERISTIC
ÉLÉMENT DE TRANSMISSION POUR UN DISPOSITIF DE RIVETAGE, DISPOSITIF DE RIVETAGE, DISPOSITIF DE FABRICATION ET PROCÉ DE DÉTERMINATION D'UN COMPORTEMENT AUX VIBRATIONS

(30) Priorität: 22.07.2015 DE 102015213761
(43) Veröffentlichungstag der Anmeldung: 25.01.2017
(73) Patentinhaber: ROBERT BOSCH GMBH, 70442 Stuttgart (DE)
(72) Erfinder: Woelke, Florian, 71229 Leonberg (DE); Scharfenberg, Andreas, 71540 Murrhardt (DE)
(74) Vertreter: Thürer, Andreas

(56) Entgegenhaltungen:
- WO-A1-2010/012973
- WO-A2-02/43898
- DE-A1- 19 905 527
- DE-A1-102014 203 757

## Beschreibung

Die vorliegende Erfindung betrifft ein Übertragungselement zur Übertragung von Schwingungen auf einen Niet in einer Stanznietvorrichtung mit einem Schwingungserzeuger, eine Stanznietvorrichtung mit Schwingungserzeuger, eine Fertigungseinrichtung mit einer solchen Stanznietvorrichtung sowie ein Verfahren zum Ermitteln eines Schwingungsverhaltens eines mittels einer Stanznietvorrichtung in Schwingung versetzten Niets.

### Stand der Technik

Verfahren zum Stanznieten dienen zum Verbinden mindestens zweier in einem Verbindungsbereich insbesondere eben ausgebildeter Bauteile (Fügepartner). Ein Stanznietverfahren zeichnet sich dadurch aus, dass ein Vorlochen der miteinander zu verbindenden Bauteile nicht erforderlich ist. Vielmehr wird ein Niet mittels eines Stempels oder eines Stempelwerkzeugs in die wenigstens zwei Bauteile eingedrückt, wobei durch einen entsprechend geformten Gegenhalter, bspw. in Form einer Matrize, der mit dem Stempelwerkzeug zusammenwirkt, sichergestellt ist, dass der Niet oder die Bauteile sich in einer bestimmten Art und Weise verformen, um eine kraft- und formschlüssige Verbindung zwischen den Bauteilen herzustellen.

Weiterhin sind bspw. aus der EP 2 318 161 B1 oder der DE 10 2014 203 757 A1 sog. Ultraschall-Stanznietverfahren bekannt, bei denen ein Schwingungserzeuger, wie bspw. ein Ultraschall-Generator verwendet wird, um ein oder mehrere Komponenten beim Verbinden der Bauteile in Schwingung zu versetzen. Durch diese Schwingung wird bspw. die aufzuwendende Kraft zum Eindrücken des Niets reduziert.

Die gattungsgemäße DE 199 05 527 A1 zeigt eine Vorrichtung zum Fuegen, beispielsweise Stanznieten oder Durchsetzfuegen, von Werkstuecken aus duktilem Material. Die Vorrichtung hat einen C-foermigen Rahmen, an dessen unterem Schenkel eine Matrize und an dessen oberem Schenkel ein Fuegewerkzeug und ein Niederhalter vorgesehen sind. Das Fügewerkzeug besteht aus einer Kolben-Zylinder-Einheit, einem Stempel zum Ausführen des Fügevorgangs und einem Schwingungserzeuger. Der Stempel wird durch eine Betätigung der Kolben-Zylinder Einheit nach unten verstellt, wobei er den Stanzniet mitnimmt. Dann wird der Stanzniet über den Stempel von der Kolben-Zylinder Einheit mit vorgegebener Kraft gegen die Werkstücke gedrückt. Ein Wegsensor erfasst die effektive Zustell- und Fügebewegung des Sensors. Der Stempel weist axiale und radiale Bohrungen auf.

### Offenbarung der Erfindung

Erfindungsgemäß werden ein Übertragungselement, eine Stanznietvorrichtung, ein Verfahren zum Ermitteln eines Schwingungsverhaltens, eine Recheneinheit zu dessen Durchführung sowie eine Fertigungseinrichtung mit den Merkmalen der unabhängigen Patentansprüche vorgeschlagen. Vorteilhafte Ausgestaltungen sind Gegenstand der Unteransprüche sowie der nachfolgenden Beschreibung.

### Vorteile der Erfindung

Ein erfindungsgemäßes Übertragungselement dient zur Übertragung von Schwingungen auf einen Niet in einer Stanznietvorrichtung mit einem Schwingungserzeuger. Dabei ist das Übertragungselement über ein erstes Ende derart mit dem Schwingungserzeuger koppelbar, dass das Übertragungselement von dem Schwingungserzeuger in Schwingung versetzbar ist, und es ist an einem zweiten Ende mit dem Niet in Kontakt bringbar. Das Übertragungselement weist einen Kanal auf, der in einer ersten Öffnung am zweiten Ende mündet, wobei der Kanal derart ausgebildet ist, dass ein optisches Signal durch den Kanal auf den Niet richtbar ist. Bei dem Übertragungselement kann es sich bspw. um eine Sonotrode handeln, die direkt oder über einen Booster an den Schwingungserzeuger, bspw. einen Schall- oder Ultraschallgenerator, ankoppelbar ist. Insbesondere kann das Übertragungselement gleichzeitig als Sonotrode und als Stempel dienen.

Bei vielen Anwendungen mit Schwingungseinkopplungen, insbesondere bei Ultraschallanwendungen, kann zur Prozessüberwachung eine Ermittlung eines Schwingungsverhaltens des in Schwingung versetzten Elements vorgenommen werden. Hierzu können bspw. sog. Vibrometer, insbesondere Laser-Vibrometer eingesetzt werden. Die Funktionsweise eines Vibrometers basiert auf dem Doppler-Effekt, durch den die Frequenz eines optischen Signals, bspw. eines Licht- oder Laserstrahls, insbesondere mit Wellenlängen im roten, sichtbaren oder im infraroten Bereich, das auf eine schwingende Oberfläche gerichtet und von dieser reflektiert wird, geändert wird. Durch ein Interferometer, d.h. der Überlagerung des optischen Signals mit geänderter Frequenz mit einem vor der Frequenzänderung abgeteilten optischen Signals, kann die Frequenzverschiebung und somit das Schwingungsverhalten, insbesondere deren Frequenz, analysiert werden. Bei einer Stanznietvorrichtung bzw. bei einem Stanznietvorgang, bei der bzw. bei dem der Niet über ein Übertragungselement in Schwingung versetzt wird, ist die Ermittlung des Schwingungsverhaltens des Niets jedoch kaum möglich, da der Niet auf der in der Regel glatten Oberfläche von dem Übertragungselement verdeckt wird. Auf der unteren Seite sind die zu verbindenden Bauteile im Weg. Zudem wird der Niet in der Regel auch von einem Niederhalter umgeben.

Durch die Verwendung eines erfindungsgemäßen Übertragungselements ist es nun jedoch möglich, auch bei einer Stanznietvorrichtung bzw. bei einem Stanznietvorgang das Schwingungsverhalten des Niets mittels einer Vibrometermessung zu ermitteln bzw. zu analysieren, da ein optisches Signal eines Vibrometers während des Eindrückens des Niets auf den Niet gerichtet werden kann.

Erfindungsgemäß mündet der Kanal weiterhin in einem zwischen dem ersten Ende und dem zweiten Ende gelegenen seitlichen Bereich in einer zweiten Öffnung, über welche das optische Signal in den Kanal einbringbar ist. Auf diese Weise kann bspw. das optische Signal eines Vibrometers sehr einfach von der Seite eingebracht werden. Hier ist in der Regel ausreichend Platz vorhanden, um eine Einkopplung des optischen Signals durch bspw. geeignete Hilfsmittel zu ermöglichen.

Erfindungsgemäß ist in dem Kanal zwischen der ersten Öffnung und der zweiten Öffnung eine optische Umlenkeinrichtung, insbesondere ein Spiegel, ein Prisma, eine Lichtleitfaser oder eine reflektierende Oberfläche in dem Übertragungselement, vorgesehen, mittels derer das optische Signal von der ersten Öffnung in Richtung der zweiten Öffnung umlenkbar ist. Auf diese Weise muss der Kanal nicht notwendigerweise als ein einziger gerader Abschnitt ausgebildet sein, sondern durch die Umlenkeinrichtung kann das optische Signal bspw. senkrecht oder zumindest möglichst senkrecht auf den Niet gelenkt werden, was insbesondere auch hinsichtlich einer Reflexion des optischen Signals vom Niet vorteilhaft ist. Insbesondere kommt als Spiegel bspw. ein Silberspiegel in Frage, der eine möglichst plane Oberfläche aufweist und möglichst auch auf eine Wellenlänge des verwendeten optischen Signals abgestimmt ist. Auch kann ein Bereich des Übertragungselementes im Kanal entsprechend bearbeitet sein, bspw. poliert, sodass eine sehr gut reflektierende Oberfläche entsteht.

Es ist von Vorteil, wenn der Kanal zwischen der ersten Öffnung und der zweiten Öffnung zwei gerade Abschnitte mit einem Schnittbereich aufweist, und wobei die optische Umlenkeinrichtung in dem Schnittbereich vorgesehen ist. Dies ist eine sehr einfache Möglichkeit, das optische Signal möglichst optimal in den Kanal einzubringen und auf den Niet zu richten. Die beiden geraden Abschnitte des Kanals können dabei bspw. als zwei Bohrungen in dem Übertragungselement ausgebildet sein, was eine sehr einfache Herstellung ermöglicht.

Vorzugsweise ist die optische Umlenkeinrichtung in einem Bereich des Übertragungselementes vorgesehen, in dem eine Schwingungsamplitude des Übertragungselementes, wenn es mittels des Schwingungserzeugers in Schwingung versetzt ist, höchstes 25%, insbesondere höchstens 10%, einer Schwingungsamplitude des Übertragungselementes am zweiten Ende aufweist. Besonders bevorzugt ist es, wenn die optische Umlenkeinrichtung in einem Bereich eines Schwingungsknotens vorgesehen ist. Auf diese Weise kann erreicht werden, dass die optische Umlenkeinrichtung möglichst wenig bzw. sogar gar nicht schwingt, wodurch das optische Signal durch die optische Umlenkeinrichtung kaum bzw. sogar gar nicht beeinflusst wird. Insbesondere können auf diese Weise möglichst genaue Messungen des Schwingungsverhaltens erfolgen.

Eine erfindungsgemäße Stanznietvorrichtung dient zum Verbinden wenigstens zweier Bauteile und weist einen Schwingungserzeuger und ein erfindungsgemäßes Übertragungselement auf. Weiterhin weist sie einen Gegenhalter und einen Antrieb auf, wobei der Schwingungserzeuger an das Übertragungselement gekoppelt ist, so dass das Übertragungselement von dem Schwingungserzeuger in Schwingung versetzt wird. Das Übertragungselement und der Gegenhalter sind derart zueinander angeordnet, dass die wenigstens zwei Bauteile zwischen dem Übertragungselement und dem Gegenhalter anordenbar sind, und dass der Niet zwischen einem dem Übertragungselement zugewandten Bauteil und dem Übertragungselement anordenbar ist. Dabei ist mittels des Antriebs über das Übertragungselement eine Kraft auf den Niet zum Eindrücken in die wenigstens zwei Bauteile ausübbar.

Vorteilhafterweise weist die Stanznietvorrichtung auch eine Vibrometeroptik auf, über welche das optische Signal durch die zweite Öffnung in den Kanal einbringbar ist, und an welche ein Vibrometer, das dazu eingerichtet ist, das optische Signal bereitzustellen, ankoppelbar ist.

Bzgl. der Vorteile einer erfindungsgemäßen Stanznietvorrichtung sei an dieser Stelle zur Vermeidung von Wiederholungen auf obige Ausführungen zum erfindungsgemäßen Übertragungselement verwiesen.

Es ist von Vorteil, wenn die Vibrometeroptik ohne unmittelbaren Kontakt zum Übertragungselement in der Stanznietvorrichtung angeordnet ist. Auf diese Weise kann verhindert werden, dass die Vibrometeroptik das Schwingungsverhalten des Übertragungselements und somit auch des Niets beeinflusst. Die Anordnung kann dabei bspw. derart sein, dass die Vibrometeroptik an einer Halterung angebracht ist, in welcher der Schwingungserzeuger derart gelagert ist, dass Schwingungen nicht auf die Halterung übertragen werden. Für eine detailliertere Beschreibung einer möglichen Ausgestaltung sei an dieser Stelle auf die Figurenbeschreibung verwiesen.

Ein erfindungsgemäßes Verfahren dient zum Ermitteln eines Schwingungsverhaltens eines mittels einer erfindungsgemäßen Stanznietvorrichtung in Schwingung versetzten Niets, während der Niet durch eine mittels des Antriebs über das Übertragungselement ausgeübte Kraft in die zwischen dem Übertragungselement und dem Gegenhalter angeordneten wenigstens zwei Bauteile eingedrückt wird. Dabei wird mittels eines Vibrometers ein optisches Signal durch den Kanal des Übertragungselementes auf den Niet gerichtet und das optische Signal wird von dem Niet reflektiert und in das Vibrometer zurückgeführt. Anhand des in das Vibrometer zurückgeführten optischen Signals wird ein Verlauf des Schwingungsverhaltens während des Eindrückens des Niets ermittelt. Die Funktionsweise eines Vibrometers ist an sich bekannt und soll daher an dieser Stelle nicht näher erläutert werden.

Als Verlauf des Schwingungsverhaltens kann insbesondere ein Verlauf der Frequenz und/oder einer Amplitude, insbesondere jeweils über der Zeit, ermittelt werden. Insbesondere kann bei dem Verfahren darauf geachtet werden, dass die Vibrometeroptik derart an der Stanznietvorrichtung angeordnet wird, dass das optisches Signal genau auf die Umlenkeinrichtung gerichtet ist, welche sich insbesondere in einem Schwingungsknoten oder zumindest in einem Bereich mit geringer Amplitude bzgl. der Schwingung befindet.

Bzgl. der Vorteile eines erfindungsgemäßen Verfahrens sei an dieser Stelle zur Vermeidung von Wiederholungen auf obige Ausführungen zum erfindungsgemäßen Übertragungselement verwiesen.

Vorzugsweise wird der Verlauf des Schwingungsverhaltens für eine Qualitätsbewertung eines zugehörigen Stanznietvorgangs und/oder einer in diesem Stanznietvorgang erzeugten Verbindung der wenigstens zwei Bauteile verwendet. Durch die Ermittlung des Verlaufs des Schwingungsverhaltens ist einfache Qualitätsbewertung sowohl des Nietvorgangs an sich als auch der damit erzeugten Nietverbindung möglich. Eine solche Qualitätsbewertung kann dabei bspw. auch wenigstens zum Teil automatisch erfolgen, so dass bspw. ein Bediener der Stanznietvorrichtung automatisch darauf hingewiesen wird, wenn eine schlechte oder fehlerhafte Nietverbindung erzeugt worden ist. Insbesondere kann anhand des Schwingungsverhaltens auch eine Frequenz, mit der sich der Niet auf und ab bewegt, deren Amplitude bzw. Schwingweite sowie deren zeitlicher Verlauf bzw. Prozessverlauf , ermittelt werden, welche für die Qualitätsbewertung herangezogen werden kann.

Vorteilhafterweise wird der Verlauf des Schwingungsverhaltens mit einem zugehörigen Stanznietvorgang verknüpft und auf einem Speichermedium abgespeichert. Damit ist eine Dokumentation des Nietvorgangs und dessen Qualität möglich ("Logbuchfunktion"). Bspw. können auf diese Weise später fehlerhafte Nietverbindungen leicht aufgefunden oder erklärt werden. Zudem ist eine solche Dokumentation für industrielle Anwendungen oftmals vorgeschrieben.

Es ist von Vorteil, wenn zusätzlich ein Verlauf der Kraft während des Eindrückens des Niets ermittelt wird, wobei der Verlauf des Schwingungsverhaltens mit dem Verlauf der Kraft synchronisiert wird. Damit kann bspw. ein redundantes Qualitätskriterium zur Verfügung gestellt werden, was bei industriellen Anwendungen gefordert wird. Bei herkömmlichen Stanznietverfahren kann eine Kraft als Funktion der Position des Stempels für eine Qualitätsbewertung des Stanznietprozesses herangezogen werden. Dabei kann bspw. untersucht werden, ob sich der Kraftverlauf innerhalb gewisser Grenzwerte, bspw. einer sog. Hüllkurve, bewegt. Bei einem Stanznietverfahren, bei dem eine Schwingung in den Verbindungsbereich einbracht wird, bspw. indem der Stempel in Schwingung versetzt wird, kann ein solcher Kraftverlauf oftmals nur unter größerem Aufwand für eine Qualitätsbewertung herangezogen werden, da die Kraft auf den Stempel durch die Schwingung oszilliert.

Vorzugsweise werden ein örtlicher Verlauf und/oder ein zeitlicher Verlauf des Schwingungsverhaltens ermittelt, z.B. das Schwingungsverhalten als Funktion der Zeit und/oder das Schwingungsverhalten als Funktion einer Position des Niets oder des Übertragungselementes. Auf diese Weise kann eine besonders effektive Qualitätsbewertung erfolgen, da bspw. ein direkter Zusammenhang zwischen dem Schwingungsverhalten und der Position des Niets und somit auch bspw. bestimmten Positionen des Niets in den zu verbindenden Bauteilen hergestellt werden kann.

Durch die Erfassung des Verlaufs insbesondere der Frequenz und/oder deren Amplitude bzw. Schwingweite und insbesondere dem Ermitteln eines Zusammenhangs dieser Frequenz bzw. Amplitude mit der Position des Stempels und/oder der Zeit kann für Stanznietverfahren mit Schwingungseinkopplung eine einfache Möglichkeit zur Qualitätsbewertung zur Verfügung gestellt werden, da verschiedene relevante Punkte im Verlauf des Nietvorgangs erkennbar sind. Weiterhin wird überwacht, inwieweit sich die Frequenz des Niets trotz einer eingestellten Grundfrequenz während des Nietvorgangs ändert (z.B. Anregung ganzzahliger Vielfacher der Anregungsfrequenz). Dieser Änderungen können dabei hinreichend genau ermittelt werden. Zweckmäßig ist dabei, wenn die Ermittlung des Verlaufs online bzw. in Echtzeit erfolgt, da dann sogar während des Nietvorgangs ggf. Maßnahmen zur Behebung eines Fehlers erfolgen können. Es kann auch bewertet werden, ob der Niet gleichmäßig mit der Grundfrequenz und gleicher Amplitude des Übertragungselementes mitschwingt (Dauerkontakt), oder ob es in höheren Schwingungsordnungen (ganzzahlige Vielfache der Grundfrequenz) schwingt und demzufolge von der Grundfrequenz abhebt (hämmernder Kontakt) oder dieser auf Grund zu starker Dämpfung nicht folgen kann.

Allgemein gültige Prozess- und Qualitätsbewertungskriterien, wie sie mit einem erfindungsgemäßen Verfahren zur Verfügung gestellt werden können, sind zudem oftmals eine Grundvoraussetzung für eine Einführung einer neuen Technologie in eine Serienanwendung.

Besonders bevorzugt ist es dabei, wenn für die Qualitätsbewertung die Frequenz und/oder deren Amplitude bzw. Schwingweite mit Grenzwerten, die insbesondere in Abhängigkeit von den wenigstens zwei Bauteilen vorgegeben werden, verglichen wird. Diese Grenzwerte können bspw. als sog. Hüllkurve vorliegen, innerhalb welcher die Funktion verlaufen soll. Je nach zu verbindenden Bauteilen, insbesondere deren Material, und/oder je nach verwendetem Niet können die Grenzwerte dabei entsprechend vorgegeben werden. Diese Grenzwerte können dabei bspw. auf Testmessungen beruhen.

Vorteilhafterweise wird der Verlauf des Schwingungsverhaltens auf Anzeigemitteln, insbesondere graphisch, dargestellt. Hierbei kann es sich bevorzugt bspw. um ein Display handeln, auf dem der Verlauf graphisch dargestellt wird. Dies ermöglicht eine besonders einfache und anschauliche Darstellung des Verlaufs bspw. für einen Bediener der Stanznietvorrichtung, der den Nietvorgang somit sehr schnell beurteilen kann.

Eine erfindungsgemäße Recheneinheit, z.B. ein eine Steuereinheit oder ein Steuergerät für eine Stanznietvorrichtung, ist, insbesondere programmtechnisch, dazu eingerichtet, ein erfindungsgemäßes Verfahren durchzuführen.

Eine erfindungsgemäße Fertigungseinrichtung weist eine erfindungsgemäße Stanznietvorrichtung, ein Vibrometer und eine erfindungsgemäße Recheneinheit auf, vorzugsweise weiterhin auch Anzeigemittel.

Bzgl. der Vorteile einer erfindungsgemäßen Fertigungseinrichtung sei an dieser Stelle zur Vermeidung von Wiederholungen auf obige Ausführungen zum erfindungsgemäßen Übertragungselement und zum erfindungsgemäßen Verfahren verwiesen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

- Figur 1: zeigt vereinfacht und schematisch eine erfindungsgemäße Fertigungseinrichtung in einer bevorzugten Ausführungsform.
- Figuren 2a bis 2d: zeigen eine Stanznietvorrichtung bei verschiedenen Phasen der Durchführung eines erfindungsgemäßen Verfahrens in einer bevorzugten Ausführungsform.
- Figur 3a: zeigt schematisch ein erfindungsgemäßes Übertragungselement für eine Stanznietvorrichtung in einer bevorzugten Ausführungsform.
- Figur 3b: zeigt schematisch ein weiteres erfindungsgemäßes Übertragungselement für eine Stanznietvorrichtung in einer bevorzugten Ausführungsform.
- Figur 4: zeigt schematisch eine erfindungsgemäße Stanznietvorrichtung in einer bevorzugten Ausführungsform.

### Detaillierte Beschreibung der Zeichnung

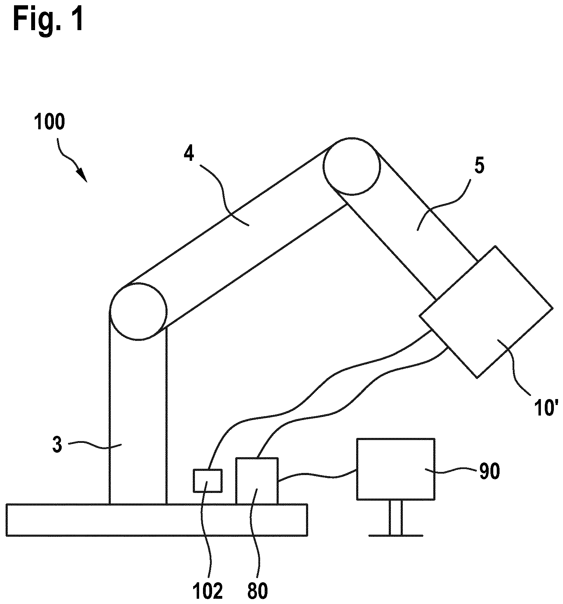

In Figur 1 ist vereinfacht und schematisch eine erfindungsgemäße Fertigungseinrichtung 100 in einer bevorzugten Ausführungsform gezeigt. Bei der Fertigungseinrichtung 100 kann es sich bspw. um einen Industrieroboter in einer Fertigungshalle, bspw. für einen automobilen Karosseriebau, handeln.

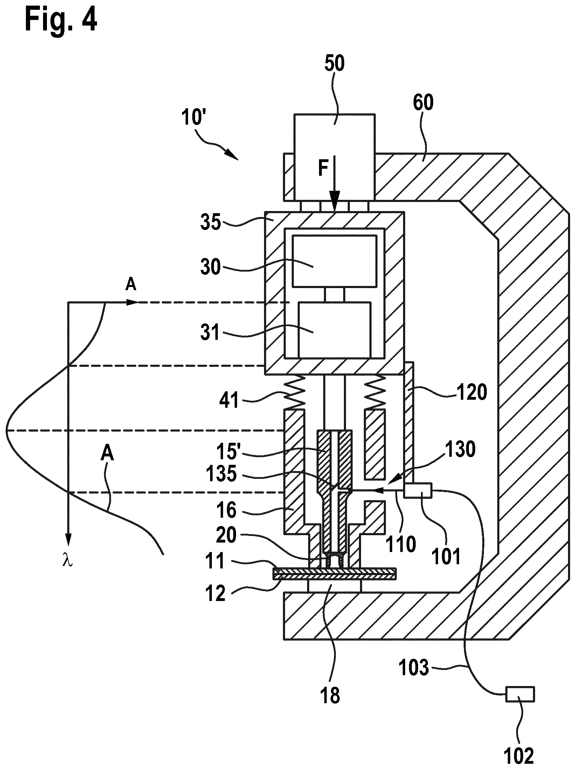

Die Fertigungseinrichtung 100 weist dabei eine auf einem Boden angeordnete Trägerstruktur 3 und zwei daran angeordnete, miteinander verbundene und bewegliche Arme 4 und 5 auf. Am Ende des Armes 5 ist eine Stanznietvorrichtung 10' angeordnet, welche in Figur 4 detaillierter beschrieben wird.

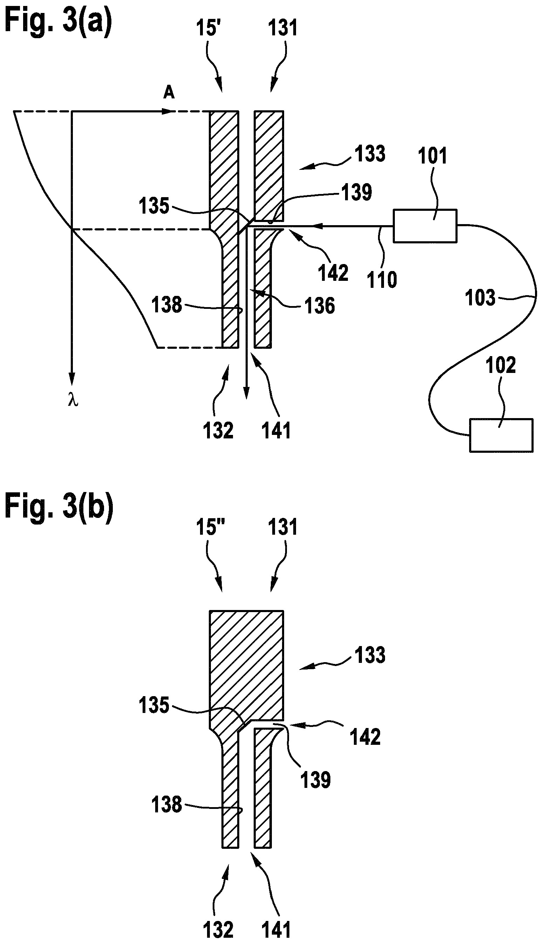

Weiterhin ist eine Recheneinheit 80 gezeigt, bei der es sich bspw. um eine Steuereinheit für die Stanznietvorrichtung 10' handelt. Die Recheneinheit 80 kann zudem auch als Steuereinheit für die gesamte Fertigungseinrichtung, d.h. neben der Stanznietvorrichtung insbesondere auch für die Ansteuerung der beweglichen Arme vorgesehen sein. Weiterhin sind Anzeigemittel 90, bspw. ein Display, vorgesehen, auf denen bspw. aktuelle Betriebsparameter der Stanznietvorrichtung angezeigt werden können. Weiterhin ist ein Vibrometer 102 gezeigt, für dessen Funktionsbeschreibung auf die Figuren 3 und 4 verwiesen wird.

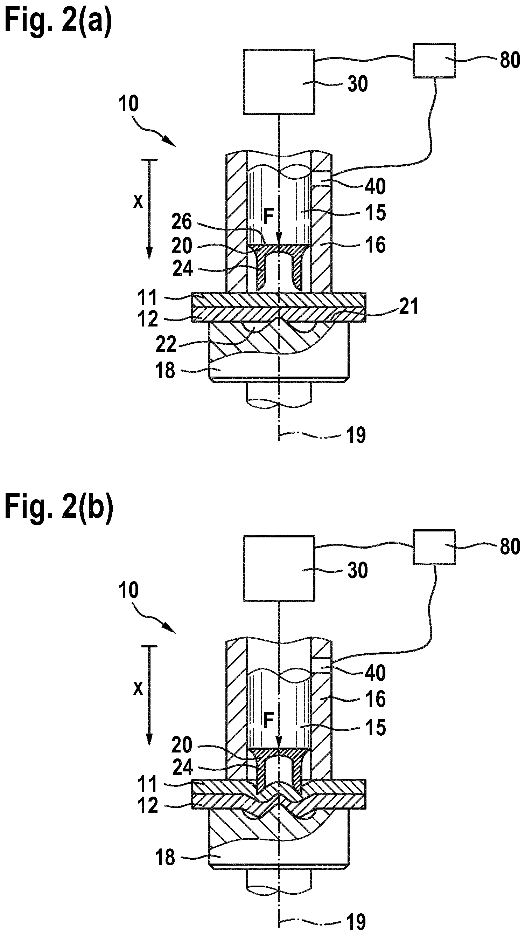

In den Figuren 2a bis 2d ist eine nicht erfindungsgemäße Stanznietvorrichtung 10 bei verschiedenen Phasen der Durchführung eines Stanznietverfahrens dargestellt. Die Stanznietvorrichtung 10 weist ein Übertragungselement 15 auf, das beispielhaft einen runden Querschnitt aufweist. Im vorliegenden Fall dient das Übertragungselement 15 oder zumindest der hier gezeigte Teil als Stempel.

Das Übertragungselement 15 ist von einem hülsenförmigen Niederhalter 16 radial umgeben und relativ zu diesem in Längsrichtung beweglich angeordnet. Insbesondere ist das Übertragungselement 15 mit einem hier nicht dargestellten Antrieb, bspw. einem hydraulischen oder pneumatischen Antrieb, gekoppelt, der dazu dient, eine zum Eindrücken eines Niets 20 in die beiden Bauteile 11, 12 benötigte Kraft F aufzubringen.

Ebenfalls ist der Niederhalter 16 dazu eingerichtet, gegen die Oberfläche des dem Übertragungselement 15 zugewandten Bauteils 11 mit einer Niederhaltekraft zu drücken. Hierzu kann bspw. ein eigener Antrieb vorgesehen sein. Jedoch kann der Niederhalter auch an den Antrieb des Übertragungselements 15 gekoppelt sein, bspw. mittels einer Feder.

Auf der dem Übertragungselement 15 und dem Niederhalter 16 gegenüberliegenden Seite der beiden Bauteile 11, 12 ist eine als Gegenhalter wirkende Matrize 18 angeordnet. Das Übertragungselement 15 und die Matrize 18 sind in Richtung einer Längsachse 19, in deren Richtung auch der Niederhalter 16 beweglich angeordnet ist, relativ zueinander bewegbar. Der Niederhalter 16 und die Matrize 18 dienen dazu, die beiden Bauteile 11, 12 zwischen dem Niederhalter 16 und der Matrize 18 während der Bearbeitung durch den Stempel 15 einzuspannen bzw. zusammenzudrücken. Die Matrize 18 weist auf der dem Bauteil 12 zugewandten Seite eine ebene Oberseite 21 auf, von der eine mulden- bzw. kuhlenförmige Ausnehmung 22 ausgeht.

Der Niet 20 besteht bevorzugt aus einem gegenüber den Werkstoffen der beiden Bauteile 11, 12 härteren Material, zumindest im Bereich des Nietschaftes 24. Die dem Bauteil 11 abgewandte, ebene Oberseite 26 ist in Wirkverbindung mit dem Übertragungselement 15 angeordnet, der an der Oberseite 26 des Niets 20 flächig anliegt.

Das Übertragungselement 15 ist mit einem Schwingungserzeuger 30 zur Erzeugung von Schwingungen bzw. Vibrationen wirkverbunden. Insbesondere werden mittels des Schwingungserzeugers 30 Ultraschallschwingungen mit einer Schwingweite (Abstand zwischen maximaler positiver und negativer Amplitude einer Schwingung) zwischen 10 µm und 110 µm (bzw. einer Amplitude zwischen 5 µm und 55 µm) und einer Frequenz zwischen 15 kHz und 35 kHz erzeugt.

Diese Schwingungen werden von dem Schwingungserzeuger 30 über das Übertragungselement 15 in den Niet 20 eingekoppelt. Die Einkopplungsrichtung der Vibrationen des Schwingungserzeugers 30 kann dabei bspw. parallel zur Längsachse 19, das heißt parallel zur Fügerichtung des Niets 20 in die Bauteile 11, 12 erfolgen.

Weiterhin ist beispielhaft ein Positionssensor 40 gezeigt, der dazu eingerichtet ist, eine Position x des Übertragungselements 15 zu erfassen. Diese Position x kann dabei an die Recheneinheit 80 übermittelt werden.

Die in Figur 2a gezeigte Phase des erfindungsgemäßen Verfahrens stellt einen Beginn des Stanznietverfahrens dar, bei dem der Nietschaft 24 in Wirkverbindung mit der Oberseite des Bauteils 11 gelangt. Dabei wird das Übertragungselement 15 mit der Kraft F gegen das dem Übertragungselement 15 zugewandte Bauteil 11 gedrückt.

In einer in Figur 2b gezeigten weiteren Phase, d.h. während des weiteren Verlaufs des Nietvorgangs und unter Unterstützung der in die Bauteile 11, 12 eingekoppelten Schwingungen schneidet bzw. stanzt der Nietschaft 24 sich zunächst in das Bauteil 11 ein. Dabei werden die beiden Bauteile 11, 12 plastisch verformt, wobei das der Ausnehmung 22 zugewandte Bauteil 12 in den entsprechenden Bereichen in die Ausnehmung 22 eingedrückt wird.

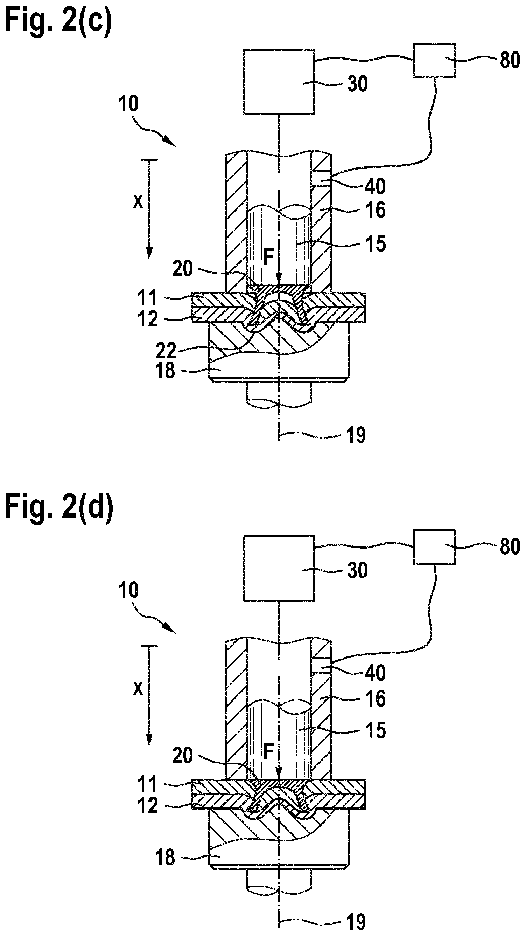

Während des weiteren Bewegungswegs bzw. der weiteren Abwärtsbewegung des Niets 20 entsprechend der Figur 2c wird der Nietschaft 24 im Bereich der Ausnehmung 22 nach außen gespreizt, wodurch die beiden Bauteile 11, 12 in Axialrichtung sicher form- und kraftschlüssig miteinander verbunden werden.

Wesentlich dabei ist, dass entsprechend der Figur 2d, die die Endposition des Niets 20 zeigt, der Nietschaft 24 nicht aus dem Bauteil 12 herausragt bzw. dieses nicht vollständig durchdringt.

Nachdem der Niet 20 die in der Figur 2d dargestellte Endposition erreicht hat, bei der die Oberseite 26 des Niets 20 zumindest in etwa bündig mit der Oberseite des Bauteils 11 abschließt, wird anschließend das Übertragungselement 15 einschließlich Niederhalter 16 wieder von den Bauteilen 11, 12 in entgegengesetzter Richtung nach oben bewegt.

In den Figuren 3a und 3b sind schematisch zwei erfindungsgemäße Übertragungselemente 15', 15" für eine Stanznietvorrichtung in bevorzugten Ausführungsformen dargestellt. Das Übertragungselement 15', 15", welches gleichzeitig bspw. als Sonotrode und als Stempel für eine Stanznietvorrichtung dienen kann, weist vorliegend ein erstes Ende 131 und ein zweites Ende 132 auf. An dem ersten Ende 131 ist das Übertragungselement 15', 15" an einen Schwingungserzeuger koppelbar und an dem zweiten Ende 132 ist das Übertragungselement 15', 15" mit einem Niet in Kontakt bringbar. Für eine Veranschaulichung hierfür sei auf Figur 4 verwiesen.

Das Übertragungselement 15', 15" weist einen Kanal 136 auf, der in einer ersten Öffnung 141 am zweiten Ende 132 und in einer zweiten Öffnung 142 in einem seitlichen Bereich 133 des Übertragungselements 15', 15" mündet. Der seitliche Bereich 133 liegt dabei zwischen dem ersten Ende 131 und dem zweiten Ende 132.

Der Kanal 136 weist vorliegend zwei gerade Abschnitte 138 und 139 auf, in deren Schnittbereich bei dem Übertragungselement 15' eine hier als Spiegel ausgebildete optische Umlenkeinrichtung 135 vorgesehen ist. In dem in Figur 3a gezeigten Beispiel sind die beiden geraden Abschnitte 138 und 139 als Bohrungen in dem Übertragungselement 15' ausgeführt. Für eine einfache Durchführung der Bohrung und ein einfacheres Einbringen des Spiegels 135 ist der gerade Abschnitt 138 vorliegend als durchgehende Bohrung ausgeführt. Es kann jedoch für den Abschnitt 138 ebenso wie für den Abschnitt 139 eine Sacklochbohrung vorgesehen sein, wie in Figur 3b gezeigt. Auch kann anstatt des Spiegels die Oberfläche 135 des Übertragungselementes in dem Schnittbereich der beiden geraden Abschnitte bspw. mechanisch derart bearbeitet werden, dass, wie in Figur 3b gezeigt, eine reflektierende Oberfläche entsteht, die wie ein Spiegel wirkt.

Weiterhin sind ein Vibrometer 102 und eine Vibrometeroptik 101 gezeigt, die mittels eines Lichtleiters 103 verbunden sind. Von dem Vibrometer 102 kann ein optisches Signal 110 bereitgestellt werden, welches über den Lichtleiter 103 zur Vibrometeroptik 101 geführt werden kann und dann über die zweite Öffnung 133 in den Kanal 136 einbringbar ist. Das optische Signal 110, bspw. ein Licht- oder Laserstrahl, wird dann am Spiegel 135 umgelenkt, sodass das optisches Signal 110 das Übertragungselement 15', 15" senkrecht zum zweiten Ende 132 durch die erste Öffnung 141 verlassen kann.

Das optische Signal kann dann bspw. auf einen Niet treffen und von dort reflektiert werden. Das optisches Signal 110 gelangt dann wieder zurück in das Übertragungselement 15', 15" und über den Spiegel 135 in die Vibrometeroptik 101 und zurück in das Vibrometer 102. Im Vibrometer 102 oder einer damit verbundenen Recheneinheit kann das optisches Signal dann analysiert werden.

Weiterhin ist zu sehen, dass der Spiegel bzw. die polierte Oberfläche 135 in einem Schwingungsknoten einer sich in dem Übertragungselement 15', 15" ausbildenden Schwingung angeordnet sind. Dies ist in Figur 3a mit dem Verlauf der Amplitude A, welche abhängig von einer eigestellten Schwingungserzeuger-Amplitude und einem Übersetzungsverhältnis des Übertragungselementes bzw. weiterer beteiligter Komponenten ist, über der Wellenlänge λ, welche abhängig von der jeweiligen Anregungsfrequenz und der Ausbreitungsgeschwindigkeit (die Phasengeschwindigkeit) ist, veranschaulicht. Für eine bessere Übersicht bzgl. des Amplitudenverlaufs innerhalb der gesamten Stanznietvorrichtung sei an dieser Stelle auf Figur 4 verwiesen.

In Figur 4 ist schematisch eine erfindungsgemäße Stanznietvorrichtung 10' in einer bevorzugten Ausführungsform dargestellt. Die Stanznietvorrichtung 10' weist einen Rahmen 60 auf, der vorzugsweise in Form eines C-Rahmens oder C-Bügels vorliegt, an welchem die einzelnen Komponenten bei einer Stanznietvorrichtung in der Regel angeordnet sind, um die gewünschte Position zueinander einnehmen zu können. Über den Rahmen 60 kann die Stanznietvorrichtung 10' bspw. an dem in Figur 1 gezeigten Arm 3 befestigt sein. Es versteht sich, dass auch bei den in den Figuren 2a bis 2d gezeigten Stanznietvorrichtungen in der Regel ein solcher Rahmen vorhanden sein kann.

Weiterhin ist ein Antrieb 50 gezeigt, bei dem es sich bspw. um einen Spindelantrieb oder dergleichen handeln kann, der dazu geeignet ist, eine Kraft F zum Eindrücken des Niets 20 in die Bauteile 11, 12 aufzubringen. An dem Antrieb 50 ist eine Haltevorrichtung 35, bspw. in Form eines Rahmens oder eines Gestells, angebracht. An der Haltevorrichtung 35 ist ein Schwingsystem, das vorliegend einen Schwingungserzeuger 30, bspw. einen UltraschallGenerator, einen Booster 31 und das Übertragungselement 15' aufweist, angeordnet. Weiterhin ist ein Niederhalter 16 gezeigt, der mittels einer Federeinheit 41, bspw. in Form einer zylindrischen Schraubendruckfeder, an die Haltevorrichtung 35 gekoppelt ist.

Weiterhin ist auf der linken Seite der Figur ein Diagramm gezeigt, in dem ein Verlauf einer Schwingungsamplitude A einer sich in dem Schwingsystem ausbildenden Schwingung über der Position λ gezeigt ist. Dabei ist zu sehen, dass der Bereich, an dem der Spiegel 135 angeordnet ist, eine Stelle geringer bis gar keiner Schwingungsamplitude ist. Insofern wirkt sich eine Schwingung in dem Übertragungselement kaum oder gar nicht auf den Spiegel 135 aus, da die Schwingungsamplitude sehr gering oder Null ist.

Weiterhin ist zu sehen, dass die Vibrometeroptik 101 über eine Vibrometerhalterung 120 an der Halterung 35 angebracht ist. Auf diese Weise wird durch die Vibrometeroptik 101 das Schwingungsverhalten des Übertragungselements 15' und somit des Niets 20 nicht oder nur sehr unwesentlich beeinflusst. Weiterhin ist zu sehen, dass in dem Niederhalter 16 eine

Ausnehmung 130 vorgesehen ist, damit das optisches Signal 110 von der Vibrometeroptik 101 in den Kanal des Übertragungselements 15' gelangen kann.

Die Ausnehmung 130 kann dabei bspw. als ein Langloch ausgebildet sein, sodass der beim Eindrücken des Niets auftretenden Relativbewegung zwischen Übertragungselement 15' und Niederhalter 16 bzw. zwischen Vibrometeroptik 101 und Niederhalter 16 Rechnung getragen werden kann.

## Patentansprüche

1. Übertragungselement (15', 15") geeignet zur Übertragung von Schwingungen und von einer Eindrückkraft auf einen Niet (20) in einer Stanznietvorrichtung (10') mit einem Schwingungserzeuger (30), wobei das Übertragungselement (15', 15") über ein erstes Ende (131) derart mit dem Schwingungserzeuger (30) koppelbar ist, dass das Übertragungselement (15', 15") von dem Schwingungserzeuger (30) in Schwingung versetzbar ist, wobei das Übertragungselement (15', 15") an einem zweiten Ende (132) mit dem Niet (20) in Kontakt bringbar ist, wobei das Übertragungselement (15', 15") einen Kanal (136), der in einer ersten Öffnung (141) am zweiten Ende (132) mündet, aufweist, wobei der Kanal (136) derart ausgebildet ist, dass ein optisches Signal (110) durch den Kanal (136) auf den Niet (20) richtbar ist, wobei der Kanal (136) weiterhin in einem zwischen dem ersten Ende (131) und dem zweiten Ende (132) gelegenen seitlichen Bereich (133) in eine zweite Öffnung (142) mündet, über welche das optische Signal (110) in den Kanal (136) einbringbar ist, **dadurch gekennzeichnet dass** in dem Kanal (136) zwischen der ersten Öffnung (141) und der zweiten Öffnung (142) eine optische Umlenkeinrichtung (135), vorgesehen ist, mittels derer das optische Signal (110) von der ersten Öffnung (141) in Richtung der zweiten Öffnung (142) umlenkbar ist.

2. Übertragungselement (15', 15") nach Anspruch 1, wobei der Kanal (136) zwischen der ersten Öffnung (141) und der zweiten Öffnung (142) zwei gerade Abschnitte (138, 139) mit einem Schnittbereich aufweist, und wobei die optische Umlenkeinrichtung (135) in dem Schnittbereich vorgesehen ist.

3. Übertragungselement (15', 15") nach Anspruch 1 oder 2, wobei die optische Umlenkeinrichtung (135) in einem Bereich des Übertragungselementes (15', 15") vorgesehen ist, in dem eine Schwingungsamplitude (A) des Übertragungselementes (15', 15"), wenn es mittels des Schwingungserzeugers (30) in Schwingung versetzt ist, höchstes 25%, insbesondere höchstens 10%, einer Schwingungsamplitude (A) des Übertragungselementes (15', 15") am zweiten Ende aufweist.

4. Stanznietvorrichtung (10') zum Verbinden wenigstens zweier Bauteile (11, 12) mit einem Schwingungserzeuger (30) und einem Übertragungselement (15', 15") nach einem der vorstehenden Ansprüche, weiterhin mit einem Gegenhalter (18) und einem Antrieb (50),
wobei der Schwingungserzeuger (30) an das Übertragungselement (15', 15") gekoppelt ist, so dass das Übertragungselement (15', 15") von dem Schwingungserzeuger (30) in Schwingung versetzbar ist,
wobei das Übertragungselement (15', 15") und der Gegenhalter (18) derart zueinander angeordnet sind, dass die wenigstens zwei Bauteile (11, 12) zwischen dem Übertragungselement (15', 15") und dem Gegenhalter (18) anordenbar sind, und dass der Niet (20) zwischen einem dem Übertragungselement (15', 15") zugewandten Bauteil (11) und dem Übertragungselement (15', 15") anordenbar ist, und
wobei mittels des Antriebs (50) über das Übertragungselement (15', 15") eine Kraft (F) auf den Niet (20) zum Eindrücken in die wenigstens zwei Bauteile (11, 12) ausübbar ist.

5. Stanznietvorrichtung (10') nach Anspruch 4, weiterhin mit einer Vibrometeroptik (101), über welche das optische Signal (110) durch die zweite Öffnung (142) in den Kanal (136) einbringbar ist, und an welche ein Vibrometer (102), das dazu eingerichtet ist, das optische Signal (110) bereitzustellen, ankoppelbar ist.

6. Stanznietvorrichtung (10') nach Anspruch 5, wobei die Vibrometeroptik (101) ohne unmittelbaren Kontakt zum Übertragungselement (15', 15") in der Stanznietvorrichtung (10') angeordnet ist.

7. Verfahren zum Ermitteln eines Schwingungsverhaltens eines mittels einer Stanznietvorrichtung (10') nach einem der Ansprüche 4 bis 6 in Schwingung versetzten Niets (20), während der Niet (20) durch eine mittels des Antriebs (50) über das Übertragungselement (15', 15") ausgeübten Kraft (F) in die zwischen dem Übertragungselement (15', 15") und dem Gegenhalter (18) angeordneten wenigstens zwei Bauteile (11, 12) eingedrückt wird,
wobei mittels eines Vibrometers (102) ein optisches Signal (110) durch den Kanal (136) des Übertragungselementes (15', 15") auf den Niet (20) gerichtet wird,
wobei das optische Signal (110) von dem Niet (20) reflektiert und in das Vibrometer (102) zurückgeführt wird, und
wobei anhand des in das Vibrometer (102) zurückgeführten optischen Signals (110) ein Verlauf des Schwingungsverhaltens während des Eindrückens des Niets (20) ermittelt wird.

8. Verfahren nach Anspruch 7, wobei der Verlauf des Schwingungsverhaltens für eine Qualitätsbewertung eines zugehörigen Stanznietvorgangs und/oder einer in diesem Stanznietvorgang erzeugten Verbindung der wenigstens zwei Bauteile (11, 12) verwendet wird.

9. Verfahren nach Anspruch 7 oder 8, wobei der Verlauf des Schwingungsverhaltens mit einem zugehörigen Stanznietvorgang verknüpft und auf einem Speichermedium abgespeichert wird.

10. Verfahren nach einem der Ansprüche 7 bis 9, wobei ein örtlicher Verlauf und/oder ein zeitlicher Verlauf des Schwingungsverhaltens ermittelt werden.

11. Verfahren nach einem der Ansprüche 7 bis 10, wobei ein Verlauf einer Frequenz und/oder einer Amplitude als Verlauf des Schwingungsverhaltens ermittelt wird.

12. Verfahren nach Anspruch 11, wobei für eine Qualitätsbewertung die Frequenz und/oder die Amplitude mit Grenzwerten (G'₁₁, G'₁₂), die insbesondere in Abhängigkeit von den wenigstens zwei Bauteilen (11, 12) und/oder der Schwingungsamplitude des Übertragungselementes vorgegeben werden, verglichen wird.

13. Verfahren nach einem der Ansprüche 7 bis 12, wobei weiterhin ein Verlauf der Kraft (F) während des Eindrückens des Niets (20) ermittelt wird, und wobei der Verlauf des Schwingungsverhaltens mit dem Verlauf der Kraft (F) synchronisiert wird.

14. Verfahren nach einem der Ansprüche 7 bis 13, wobei der Verlauf des Schwingungsverhaltens auf Anzeigemitteln (90), insbesondere graphisch, dargestellt wird.

15. Recheneinheit (80), die dazu eingerichtet ist, ein Verfahren nach einem der Ansprüche 7 bis 14 durchzuführen.

16. Fertigungseinrichtung (100) aufweisend eine Stanznietvorrichtung (10') nach einem der Ansprüche 4 bis 6, ein Vibrometer (102) und eine Recheneinheit (80) nach Anspruch 15, und vorzugsweise weiterhin aufweisend Anzeigemittel (90).

17. Computerprogramm, das eine Recheneinheit (80) veranlasst, die Vorrichtung nach einem der Ansprüche 4 bis 6 ein Verfahren nach einem der Ansprüche 7 bis 14 durchzuführen, wenn es auf der Recheneinheit (80) ausgeführt wird.

18. Maschinenlesbares Speichermedium mit einem darauf gespeicherten Computerprogramm nach Anspruch 17.

## Claims

1. Transmission element (15', 15") suitable for transmitting oscillations and an impression force on a rivet (20) in a punch-riveting device (10') having an oscillation generator (30), wherein the transmission element (15', 15") by way of a first end (131) is capable of being coupled to the oscillation generator (30) in such a manner that the transmission element (15', 15") is capable of being set in oscillation by the oscillation generator (30), wherein the transmission element (15', 15") at a second end (132) is capable of contacting the rivet (20), wherein the transmission element (15, 15") has a duct (136) which opens out into an opening (141) at the second end (132), wherein the duct (136) is configured in such a manner that an optical signal (110) is capable of being directed through the duct (136) onto the rivet (20), wherein furthermore the duct (136) in a lateral region (133) between the first end (131) and the second end (132) opens into a second opening (142) by way of which the optical signal (110) is capable of being introduced into the duct (136), **characterized in that** an optical deflection installation (135) by means of which the optical signal (110) is capable of being deflected from the first opening (141) in the direction of the second opening (142) is provided in the duct (136) between the first opening (141) and the second opening (142) .

2. Transmission element (15', 15") according to Claim 1, wherein the duct (136) between the first opening (141) and the second opening (142) has two straight portions (138, 139) having an intersection region, and wherein the optical deflection installation (135) is provided in the intersection region.

3. Transmission element (15', 15") according to Claim 1 or 2, wherein the optical deflection installation (135) is provided in a region of the transmission element (15' 15") in which an oscillation amplitude (A) of the transmission element (15', 15") when the latter by means of the oscillation generator (30) is set in oscillation has at most 25%, in particular at most 10%, of an oscillation amplitude (A) of the transmission element (15', 15") at the second end.

4. Punch-riveting device (10') for connecting at least two components (11, 12), having an oscillation generator (30) and a transmission element (15', 15") according to one of the preceding claims, furthermore having a counterholder (18) and a drive (50),
wherein the oscillation generator (30) is coupled to the transmission element (15' 15") such that the transmission element (15', 15") is capable of being set in oscillation by the oscillation generator (30) ;
wherein the transmission element (15', 15") and the counterholder (18) are mutually disposed in such a manner that the at least two components (11, 12) are disposable between the transmission element (15', 15") and the counterholder (18), and that the rivet (20) is disposable between a component (11) that faces the transmission element (15', 15") and the transmission element (15, 15"); and
wherein by means of the drive (50) a force (F) is capable of being exerted by way of the transmission element (15', 15") on the rivet (20) so as to impress the latter into the at least two components (11, 12).

5. Punch-riveting device (10') according to Claim 4, furthermore having a vibrometer optics unit (101) by way of which the optical signal (110) is capable of being introduced through the second opening (142) into the duct (136) and to which a vibrometer (102) which is specified for providing the optical signal (110) is capable of being coupled.

6. Punch-riveting device (10') according to Claim 5, wherein the vibrometer optics unit (101) is disposed in the punch-riveting device (10') without direct contact with the transmission element (15', 15").

7. Method for determining an oscillation behaviour of a rivet (20) set in oscillation by means of a punch-riveting device (10') according to one of Claims 4 to 6, while the rivet (20) by a force (F) that by means of the drive (50) is exerted by way of the transmission element (15', 15") is impressed into the at least two components (11, 12) that are disposed between the transmission element (15', 15") and the counterholder (18),
wherein by means of a vibrometer (102) an optical signal (11) is directed through the duct (136) of the transmission element (15', 15") onto the rivet (20) ;
wherein the optical signal (110) is reflected by the rivet (20) and guided back into the vibrometer (102); and
wherein a profile of the oscillation behaviour during the impression of the rivet (20) is determined by means of the optical signal (110) guided back into the vibrometer (102).

8. Method according to Claim 7, wherein the profile of the oscillation behaviour is used for a quality appraisal of an associated punch-riveting procedure and/or a connection of the at least two components (11, 12) that is generated in said punch-riveting procedure.

9. Method according to Claim 7 or 8, wherein the profile of the oscillation behaviour is linked with an associated punch-riveting procedure and memorized in a memory medium.

10. Method according to one of Claims 7 to 9, wherein a local profile and/or a temporal profile of the oscillation behaviour are/is determined.

11. Method according to one of Claims 7 to 10, wherein a profile of a frequency and/or an amplitude are/is determined as the profile of the oscillation behaviour.

12. Method according to Claim 11, wherein for a quality appraisal the frequency and/or the amplitude are/is compared with limit values (G'₁₁, G'₁₂) which are in particular predefined as a function of the at least two components (11, 12) and/or of the oscillation amplitude of the transmission element.

13. Method according to one of Claims 7 to 12, wherein furthermore a profile of the force (F) while impressing the rivet (20) is determined, and wherein the profile of the oscillation behaviour is synchronized with the profile of the force (F).

14. Method according to one of Claims 7 to 13, wherein the profile of the oscillation behaviour is, in particular graphically, represented on display means (90).

15. Computer unit (80) which is specified for carrying out a method according to one of Claims 7 to 14.

16. Production installation (100) having a punch-riveting device (10') according to one of Claims 4 to 6, a vibrometer (102), and a computer unit (80) according to Claim 15, and furthermore preferably having display means (90).

17. Computer software which initiates a computer unit (80) to carry out a method according to one of Claims 7 to 14 by a device according to one of Claims 4 to 6 when said computer software is executed on the computer unit (80).

18. Machine-readable memory medium having a computer software according to Claim 17 memorized thereon.

## Revendications

1. Élément de transmission (15', 15") adapté pour la transmission d'oscillations et d'une force d'enfoncement sur un rivet (20) dans un arrangement de rivetage par poinçonnage (10') comprenant un générateur d'oscillations (30), l'élément de transmission (15', 15") pouvant être couplé au générateur d'oscillations (30) par le biais d'une première extrémité (131) de telle sorte que l'élément de transmission (15', 15") peut être amené à osciller par le générateur d'oscillations (30), l'élément de transmission (15', 15") pouvant être mis en contact avec le rivet (20) au niveau d'une deuxième extrémité (132), l'élément de transmission (15', 15") possédant un canal (136) qui débouche dans une première ouverture (141) au niveau de la deuxième extrémité (132), le canal (136) étant configuré de telle sorte qu'un signal optique (110) peut être dirigé sur le rivet (20) à travers le canal (136), le canal (136) débouchant en outre dans une deuxième ouverture (142), dans une zone latérale (133) qui se trouve entre la première extrémité (131) et la deuxième extrémité (132), par le biais de laquelle le signal optique (110) peut être introduit dans le canal (136), **caractérisé en ce qu'**un dispositif de déviation optique (135) se trouve dans le canal (136) entre la première ouverture (141) et la deuxième ouverture (142), au moyen duquel le signal optique (110) peut être dévié de la première ouverture (141) en direction de la deuxième ouverture (142).

2. Élément de transmission (15', 15") selon la revendication 1, le canal (136) possédant entre la première ouverture (141) et la deuxième ouverture (142) deux portions droites (138, 139) comprenant une zone de coupe, et le dispositif de déviation optique (135) se trouvant dans la zone de coupe.

3. Élément de transmission (15', 15") selon la revendication 1 ou 2, le dispositif de déviation optique (135) se trouvant dans une zone de l'élément de transmission (15', 15") dans laquelle une amplitude d'oscillation (A) de l'élément de transmission (15', 15"), lorsqu'il est amené à osciller au moyen du générateur d'oscillations (30), présente au maximum 25 %, notamment au maximum 10 % d'une amplitude d'oscillation (A) de l'élément de transmission (15', 15") au niveau de la deuxième extrémité.

4. Arrangement de rivetage par poinçonnage (10') destiné à assembler au moins deux éléments structuraux (11, 12), comprenant un générateur d'oscillations (30) et un élément de transmission (15', 15") selon l'une des revendications précédentes, comprend en outre une contrebouterolle (18) et un mécanisme d'entraînement (50),
le générateur d'oscillations (30) étant couplé à l'élément de transmission (15', 15") de telle sorte que l'élément de transmission (15', 15") peut être amené à osciller par le générateur d'oscillations (30),
l'élément de transmission (15', 15") et la contrebouterolle (18) étant disposés l'un par rapport à l'autre de telle sorte que les au moins deux éléments structuraux (11, 12) peuvent être disposés entre l'élément de transmission (15', 15") et la contrebouterolle (18) et que le rivet (20) peut être disposé entre un élément structural (11) qui fait face à l'élément de transmission (15', 15") et l'élément de transmission (15', 15"), et
une force (F) pouvant être exercée sur le rivet (20), au moyen du mécanisme d'entraînement (50) par le biais de l'élément de transmission (15', 15"), pour l'enfoncer dans les au moins deux éléments structuraux (11, 12).

5. Arrangement de rivetage par poinçonnage (10') selon la revendication 4, comprenant en outre une optique de vibromètre (101) par le biais de laquelle le signal optique (110) peut être introduit dans le canal (136) à travers la deuxième ouverture (142) et à laquelle peut être accouplé un vibromètre (102) qui est conçu pour fournir le signal optique (110).

6. Arrangement de rivetage par poinçonnage (10') selon la revendication 5, l'optique de vibromètre (101) étant disposée dans l'arrangement de rivetage par poinçonnage (10') sans contact direct avec l'élément de transmission (15', 15").

7. Procédé de détermination d'un comportement oscillant d'un rivet (20) amené à osciller au moyen d'un arrangement de rivetage par poinçonnage (10') selon l'une des revendications 4 à 6, pendant que le rivet (20) est enfoncé dans les au moins deux éléments structuraux (11, 12) disposés entre l'élément de transmission (15', 15") et la contrebouterolle (18) par une force (F) exercée au moyen du mécanisme d'entraînement (50) par le biais de l'élément de transmission (15', 15"),
un signal optique (110) étant dirigé sur le rivet (20) au moyen d'un vibromètre (102) à travers le canal (136) de l'élément de transmission (15', 15"),
le signal optique (110) étant réfléchi par le rivet (20) et renvoyé dans le vibromètre (102), et
un tracé du comportement oscillant pendant l'enfoncement du rivet (20) étant déterminé à l'aide du signal optique (110) renvoyé dans le vibromètre (102).

8. Procédé selon la revendication 7, le tracé du comportement oscillant étant utilisé pour une évaluation de la qualité d'une opération de rivetage par poinçonnage associée et/ou d'un assemblage des au moins deux éléments structuraux (11, 12) produit dans cette opération de rivetage par poinçonnage.

9. Procédé selon la revendication 7 ou 8, le tracé du comportement oscillant étant lié à une opération de rivetage par poinçonnage associée et enregistré sur un support d'enregistrement.

10. Procédé selon l'une des revendications 7 à 9, un tracé local et/ou un tracé dans le temps du comportement oscillant étant déterminé.

11. Procédé selon l'une des revendications 7 à 10, le tracé d'une fréquence et/ou d'une amplitude étant déterminé en tant que tracé du comportement oscillant.

12. Procédé selon la revendication 11, la fréquence et/ou l'amplitude étant, pour une évaluation de la qualité, comparées avec des valeurs limites (G'₁₁, G'₁₂), lesquelles sont notamment prédéfinies en fonction des au moins deux éléments structuraux (11, 12) et/ou de l'amplitude d'oscillation de l'élément de transmission.

13. Procédé selon l'une des revendications 7 à 12, un tracé de la force (F) pendant l'enfoncement du rivet (20) étant en outre déterminé, et le tracé du comportement oscillant étant synchronisé avec le tracé de la force (F).

14. Procédé selon l'une des revendications 7 à 13, le tracé du comportement oscillant étant représenté sur des moyens d'affichage (90), notamment sous forme graphique.

15. Unité de calcul (80), laquelle est conçue pour mettre en œuvre un procédé selon l'une des revendications 7 à 14.

16. Dispositif de fabrication (100) possédant un arrangement de rivetage par poinçonnage (10') selon l'une des revendications 4 à 6, un vibromètre (102) et une unité de calcul (80) selon la revendication 15, et possédant de préférence en outre des moyens d'affichage (90) .

17. Programme informatique qui amène une unité de calcul (80) à mettre en œuvre un procédé selon l'une des revendications 7 à 14 par l'arrangement selon l'une des revendications 4 à 6 lorsqu'il est exécuté sur l'unité de calcul (80).

18. Support d'enregistrement lisible par machine sur lequel est enregistré un programme informatique selon la revendication 17.
